(19) Europäisches Patentamt
European Patent Office
Office européen des brevets

(11) Veröffentlichungsnummer: **0 208 949**
**A2**

(12) **EUROPÄISCHE PATENTANMELDUNG**

(21) Anmeldenummer: 86108487.9

(51) Int. Cl.4: **G01N 7/00**

(22) Anmeldetag: 21.06.86

(30) Priorität: 08.07.85 DE 3524345

(43) Veröffentlichungstag der Anmeldung:
21.01.87 Patentblatt 87/04

(84) Benannte Vertragsstaaten:
**DE FR GB**

(71) Anmelder: **Plischke & Buhr KG**
**Siemensstrasse 6-12**
**D-5300 Bonn 1(DE)**

(72) Erfinder: **Plischke, Jürgen**
**Rosenthalstrasse 45**
**D-5216 Niederkassel 5(DE)**
Erfinder: **Buhr, Nikolaus**
**Zülpicher Strasse 19**
**D-5300 Bonn 1(DE)**

(74) Vertreter: **Müller-Gerbes, Margot**
**Rheinaustrasse 30-32**
**D-5300 Bonn 3 (Beuel)(DE)**

(54) **Druckmesseinrichtung, insbesondere zum Erfassen von Gasmengenänderungen in einem abgeschlossenen Reaktionsgefäss.**

(57) Die Erfindung betrifft eine Druckmeßeinrichtung, insbesondere zum Erfassen von Gasmengenänderungen in einem abgeschlossenen Reaktionsgefäß (5) unter Einsatz eines elektrische Signale liefernden Differenz-Drucksensors (1), wobei zum luftdichten lösbaren Verbinden des Drucksensors (1) mit dem Reaktionsgefäß (5) ein ein-oder mehrteiliges Verbindungsteil (2) mit einem durchgehenden Verbindungskanal (21) vorgesehen ist, das den Meßeinlaßstutzen (12) des Drucksensors (1) außenseitig umfaßt und mit diesem mechansich fest und luftdicht verbunden ist, und das Verbindungsteil mit einer einen Druckausgleich gestattenden Belüftungseinrichtung ausgebildet ist.

Fig 1

## Druckmeßeinrichtung, insbesondere zum Erfassen von Gasmengenänderungen in einem abgeschlossenen Reaktionsgefäß

Die Erfindung bezieht sich auf eine Druckmeßeinrichtung, insbesondere zum Erfassen von Gasmengenänderungen in einem abgeschlossenen Reaktionsgefäß, unter Einsatz eines elektrische Signale liefernden Differenz-Drucksensors, der mit einem negativen Einlaßstutzen zum Erfassen des Außendruckes und einem Meßeinlaßstutzen zum Erfassen des in dem Reaktionsgefäß herrschenden Druckes ausgerüstet ist.

Differenz-Drucksensoren, die Druckänderungen, auch sehr kleine Druckänderungen relativ zum Außendruck bzw. Umgebungsdruck messen und entsprechende elektrische Ausgangssignale liefern, sind bekannt und handelsüblich erhältlich.

Der Erfindung liegt die Aufgabe zugrunde, sehr geringe Gasmengenänderungen, beispielsweise die Produktion oder Absorption von Gasen, beispielsweise die Sauerstoffrespiration von kleinen Lebewesen, in Langzeittests zu messen. Hierbei wird von einem abgeschlossenen Reaktionsgefäß ausgegangen, in dem die zu erfassenden Gasmengenänderungen vor sich gehen, die in dem abgeschlossenen Reaktionsgefäß eine meßbare Druckänderung bewirken. Die Erfindung soll nun eine Druckmeßeinrichtung schaffen, mit der diese kleinen Druckänderungen auf möglichst einfache Weise automatisch für Langzeitmessungen in vorgegebenen Abständen erfaßt werden, d.h. gemessen werden und unter Berücksichtigung des Einflusses von Schwankungen des Außendruckes und der Temperaturen ausgewertet werden. Eine weitere Aufgabe der Erfindung besteht darin, die Druckmeßeinrichtung um eine zusätzliche Vorrichtung zur Messung des Volumens des Reaktionsraumes zu ergänzen, um diese erforderliche Volumenbestimmung des Reaktionsraumes möglichst einfach und automatisch vornehmen zu können.

Ausgehend von den bekannten Differenz-Drucksensoren wird erfindungsgemäß eine Druckmeßeinrichtung zum Lösen der gestellten Aufgaben vorgeschlagen, bei der zum luftdichten lösbaren Verbinden des Drucksensors mit dem Reaktionsgefäß ein ein-oder mehrteiliges mit einem durchgehenden Verbindungskanal ausgerüstetes Verbindungsteil vorgesehen ist, das mit einem Ende den Meßeinlaßstutzen des Drucksensors außenseitig umfaßt und mit diesem mechanisch fest und luftdicht verbunden ist, und mit einer einen Druckausgleich gestattenden Belüftungseinrichtung ausgebildet ist.

Die Erfindung schafft als Voraussetzung für eine möglichst einfache und auch automatisch arbeitende Druckmeßeinrichtung eine geeignete Verbindung des Drucksensors mit dem Reaktionsgefäß, dessen Gasmengenänderung indirekt über die Druckänderung gemessen wird, über ein speziell ausgebildetes Verbindungsteil, z.B. einen ein- oder mehrteiligen Glasstopfen. Dieser Glasstopfen erfüllt die Aufgabe des Herstellens einer mechanisch festen und luftdichten Verbindung zwischen Glasstopfen und Drucksensor, sodaß dieser als eine Einheit handhabbar ist. Die feste Verbindung wird beispielsweise durch Kleben erzielt.

Desweiteren ist das Verbindungsteil so ausgebildet, daß ein Druckausgleich mit der Umgebung möglich ist, beispielsweise in der Weise, daß es mit einem seitlichen Stutzen mit durchgehendem Belüftungskanal der mittels eines Ventils verschließbar ist, ausgerüstet ist. Durch Öffnen oder Schließen des Ventils, ist der gewünschte Druckausgleich möglich. Auch andere Ausgestaltungen der Belüftungseinrichtung sind möglich, beispielsweise durch ein zusätzliches Teil, z.B. in Gestalt eines Glasanschlußstopfens, der über den Steckkonus mit dem ersten Glasstopfen luftdicht lösbar verbindbar ist und der einen mit dem Verbindungskanal des Glasstopfens kommunizierenden durchgehenden Verbindungskanal aufweist. Bei dieser zweiteiligen Ausbildung kann in weiterer Ausgestaltung der Erfindung die Belüftung in der Weise vorgesehen sein, daß in dem Glasstopfen ein etwa senkrecht zu dem Verbindungskanal verlaufender und mit diesem kommunizierender Belüftungskanal ausgebildet ist, der mit einem in der Wandung des Glasanschlußstopfens ausgebildeten Belüftungskanal korrespondiert. Durch Drehen des Drucksensors und damit des mit diesem fest verbundenen Glasstopfens können die beiden Belüftungskanäle miteinander in Verbindung gebracht werden und damit einen Druckausgleich ermöglichen oder aber die Belüftungseinrichtung verschlossen werden.

Diese Ausführung der Druckmeßeinrichtung gewährleistet eine leichte Bedienbarkeit, da der Drucksensor gleichzeitig als Bedienungsknopf benutzt wird, und eine hohe Bruchsicherheit durch eine kompakte Bauform. Die Anschlüße an weitere Bauteile bzw. die Reaktionsgefäße werden durch Steckkonus ermöglicht, die normgemäß ausgeführt, problemlos an vorhandene Geräteteile anschließbar sind. Durch Ausbildung der Steckkonus mit Normschliff, ist ein paßgenaues luftdichtes Einsetzen und Wiederausbauen möglich.

Um eine Auswertung der mittels der erfindungsgemäßen Druckmeßeinrichtung gemessenen Daten zu ermöglichen, ist vor jeder Meßreihe erforderlich, daß das Volumen des Reaktionsgefäßes, d.h. des Reaktionsraumes, dessen Druckänderungen in Folge von Gasmengenänderungen gemessen werden sollen, bestimmt wird.

Erfindungsgemäß wird hierzu eine in die Glasstopfen, d.h. die Verbindungsteile zwischen Drucksensor und Reaktionsgefäß, integrierte Vorrichtung vorgesehen, die mit dem Verbindungskanälen der Glasstopfen kommuniziert und mit der eine reproduzierbare Volumenänderung des angeschlossenen Reaktionsraumes des Reaktionsgefäßes erzeugbar ist. Diese Vorrichtung weist beispielsweise einen Meßzylinder mit einem Hubkolben und einem mechanischen, elektrischen bzw. elektronischen Stellglied auf, wobei der Meßzylinder an einen in einem Anschlußstutzen des Glasanschlußstopfens ausgebildeten Absaugkanal anschließbar ist. Mit dieser Vorrichtung kann eine reproduzierbare und genau bestimmbare Volumenänderung des Reaktionsraumes zu einem gewünschten Zeitpunkt ausgelöst und gemessen werden. Zur definitiven Bestimmung des gesamten Volumens des Reaktionsraumes sind noch eine exakte Messung des absoluten Außendruckes und des Druckes des Reaktionsgefäßes relativ zum Außendruck vor der Volumenänderung und nach der Volumenänderung erforderlich, wofür entsprechende Einrichtungen zum Messen vorgesehen sind. Aus diesen Daten kann dann in einfacher Weise das Reaktionsvolumen des Reaktionsgefäßes berechnet werden.

Um Langzeitmessungen, d.h. das wiederholte Messen von Daten in vorbestimmten Abständen über einen längeren Zeitraum automatisch durchführen zu können, ist in weiterer Ausbildung der Erfindung vorgeschlagen, daß der Drucksensor mit einer Meßdatenverarbeitungsanlage verbunden ist, die die ausgelösten elektrischen Signale auswertet. Hierbei können ein oder mehrere Drucksoren an die Meßdatenverarbeitungsanlage angeschlossen sein. Im wesentlichen enthält die erfindungsgemäße Meßdatenverarbeitungsanlage eine zentrale digitale Recheneinheit , mit einem die analogen Signale des Drucksensors an die digitale Recheneinheit anpassenden Wandler, dem ein Meßverstärker mit Multiplexer für die ankommenden und auszuwählenden Signale vorgeschaltet sind. Desweiteren ist der zentralen Rechen einheit bevorzugt ein Datenspeicher, sowie Datenausgabeeinrichtung und eine Bedienungstastatur zugeordnet. Die zentrale Recheneinheit sollte erfindungsgemäß mindestens die folgenden Funktionen erfüllen:

-Steuerung der Peripherie,

-Kontrolle des realen Zeitablaufes,

-Meßwerterfassung,

-Datenspeicherung,

-Datenverwaltung und

-Meßwertverarbeitung.

Desweiteren sind die weiteren noch erforderlichen Meßdaten, z.B. Außendruck, Temperatur, zu erfassen und über den Rechner zu verarbeiten.

Für den bevorzugten Anwendungsbereich der erfindungsgemäßen Druckmeßeinrichtung zum Messen von geringen Gasmengenänderungen werden bevorzugt Differenz-Drucksensoren mit einem Meßbereich von etwa 0,05 bis 5o hPa eingesetzt.

Die automatische Meßdatenerfassung wird ermöglicht durch den Einsatz von Differenz-Drucksensoren, die mit speziell ausgebildeten Verbindungsteilen in Gestalt von Glasstopfen fest und unlösbar verbunden . sind, die zugleich eine Belüftungseinrichtung und eine Zusatzeinrichtung zur automatischen Bestimmung des Volumens des Reaktionsgefäßes aufweisen und bei der die Meßsignale über eine digitale Rechnereinheit erfaßt und ausgewertet werden.

Die Erfindung wird nachfolgend in der Zeichnung beispielhaft erläutert. Es zeigen

Figur 1 eine schematische Ansicht mit Teilquerschnitt eines Drucksensors mit Glasstopfen als Verbindungsteil zum Reaktionsgefäß

Figur 2 einen Drucksensor mit Glasstopfen mit Ventil

Figur 3 einen Drucksensor mit Glasstopfen und Vorrichtung zur Volumenbestimmung

Figur 4 ein Schema der Meßdatenverarbeitungsanlage.

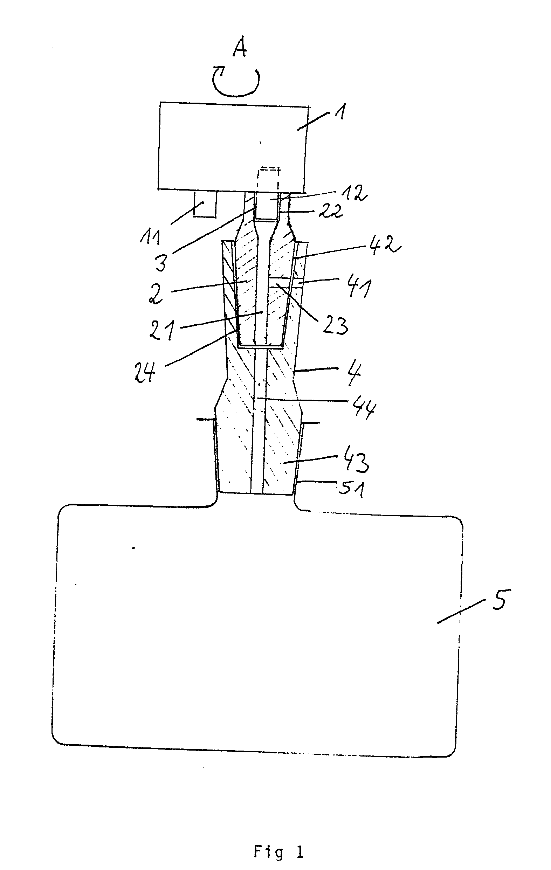

In der Figur 1 ist das Reaktionsgefäß 5 dargestellt, das ein bestimmtes Reaktionsvolumen beinhaltet. Es sollen nun bestimmte Vorgänge, die im Inneren des abgeschlossenen Reaktionsgefäßes ablaufen, beispielsweise Gasmengenänderungen, wie z.B. die Sauerstoffrespiration eines Lebewesens, beispielsweise eines Frosches, der in dem Reaktionsgefäß lebt, gemessen werden. Diese Gasmengenänderungen werden indirekt über die dieser entsprechenden sich in dem Reaktionsgefäß 5 einstellenden, allerdings sehr geringen Druckänderung über einen längeren Zeitraum hinweg erfaßt und gemessen.

Hierzu ist der Drucksensor 1, der als Differenz-Drucksensor mit dem negativen Einlaßstutzen 11 und dem Meßeinlaßstutzen 12 ausgebildet ist, über die Verbindungsteile, 2,4 mit dem Reaktionsgefäß 5, d.h. dem Reaktionsraum verbunden. Das Verbindungsteil 2, als Glasstopfen mit zentralem durchgehendem Verbindungskanal 21 ausgebildet, ist mit seinem erweiterten Ende 22 auf den Meßeinlaßstutzen 12 aufgeschoben und mit diesem im Bereich der Fuge 3 beispielsweise mittels eines geeigneten Haftklebers haftfest und luftdicht verbunden. Die Verbindungsteile, wie der Glasstopfen können massiv aus Glas oder hohl hergestellt sein, wobei der Verbindungskanal 21 einen möglichst kleinen Querschnitt aufweisen sollte, um eine hohe Meßgenauigkeit zu erzielen. Der Verbindungskanal kann beispielsweise durch Bohren hergestellt werden.

Drucksensor 1 und Glasstopfen 2 sind ein integriertes Bauteil. Das freie Ende des Glasstopfens 2 ist beispielsweise als Steckkonus mit Normmaßen und und Normschliff ausgebildet, sodaß es in entsprechende Aufnahmekonusse von Verbindungs-und Anschlußteilen einpaßbar ist. In dem gezeigten Beispiel nach Figur 1 ist der Glasstopfen 2 über ein weiteres Verbindungteil, den Glasanschlußstopfen 4 mit dem Eingang 51 des Reaktionsgefäßes verbunden, wobei der Glasanschlußstopfen 4 einen entsprechenden Aufnahmekonus 42 für den Steckkonus 24 des Glasstopfens und auf der gegenüberliegenden Seite den Anschlußsteckkonus 43 zum Einpassen in den entsprechenden Konus der Einfüllöffnung 51 des Reaktionsgefäßes 5 aufweist.

Der Glasanschlußstopfen 4 weist ebenfalls einen zentralen durchgehenden Verbindungskanal 44 auf, der mit dem Verbindungskanal 21 des Glasstopfens kommuniziert. Die Belüftungseinrichtung der Verbindungsteile zwischen dem Drucksensor 1 und dem Reaktionsgefäß 5 wird in dem gezeigten Beispiel gemäß Figur 1 durch senkrecht zu dem Verbindungskanal 21 des Glasstopfens 2 ausgebildeten und mit diesem kommunizierenden Belüftungskanal 23 hergestellt, der mit einer entsprechenden Belüftungsbohrung 41 in der Wandung des Glasanschlußstopfens 4 kommunizieren kann, wie dargestellt. Durch Drehen des Drucksensors 1 in Pfeilrichtung A und damit des Glasstopfens 2, kann die Kommunikation zwischen dem Belüftungskanal 23 und dem Belüftungsloch 41 unterbrochen werden und damit ein luftdichter Verschluß hergestellt werden. Es ist möglich, die Stellung von Glasstopfen 2 und Glasanschlußstopfen 4 gegeneinander durch nicht dargestellte Haken oder Federn zu sichern, sodaß ungewollte Verdrehungen und damit möglicherweise Undichtigkeiten vermieden werden.

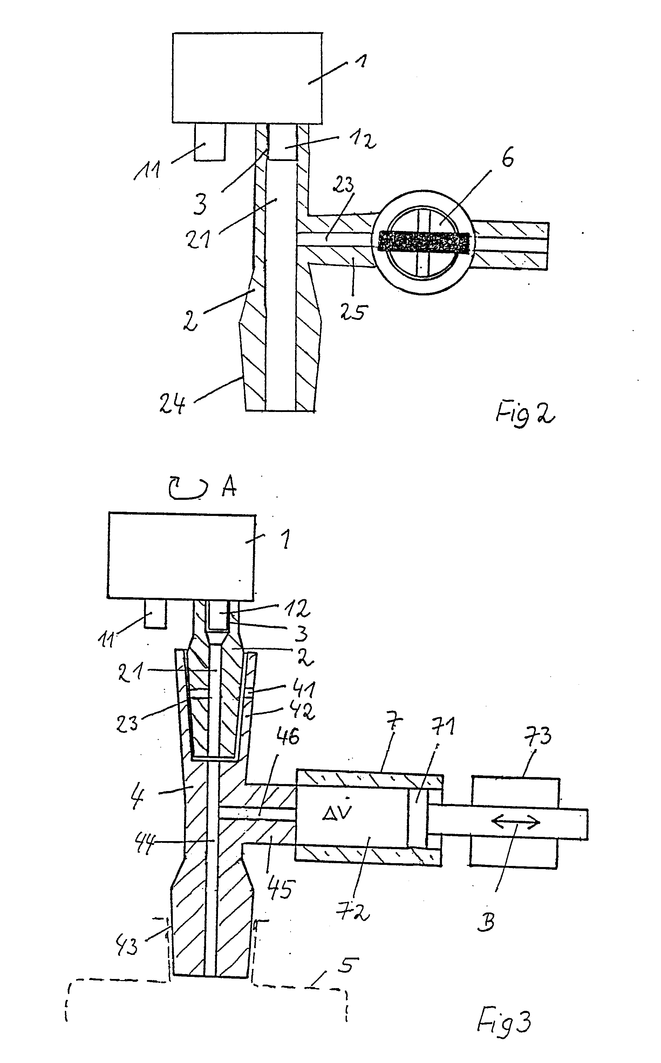

In der Figur 2 ist ein Drucksensor 1 mit fest und unlösbar mit im Bereich des Meßeinlaßstutzens 12 verbundenem Glasstopfen 2 dargestellt, bei dem die Belüftungseinrichtung in Gestalt eines in den seitlich abgezweigten Belüftungskanal 23 eingesetzten Ventils 6 gebildet wird. Hierbei ist der Belüftungskanal 23 in dem an den Glasstopfen 2 seitlich angesetzten Stutzen 25 verlängert ausgeführt. Der Stutzen 25 bildet mit dem Glasstopfen 2 ebenfalls ein intgeriertes einheitliches Bauteil. Im Bereich des Steckkonus 24 kann das Reaktionsgefäß entweder direkt oder über weitere Verbindungsglieder angeschlossen werden. Auch der Einsatz eines Ventiles ermöglicht eine leichte Bedienbarkeit der Belüftungseinrichtung.

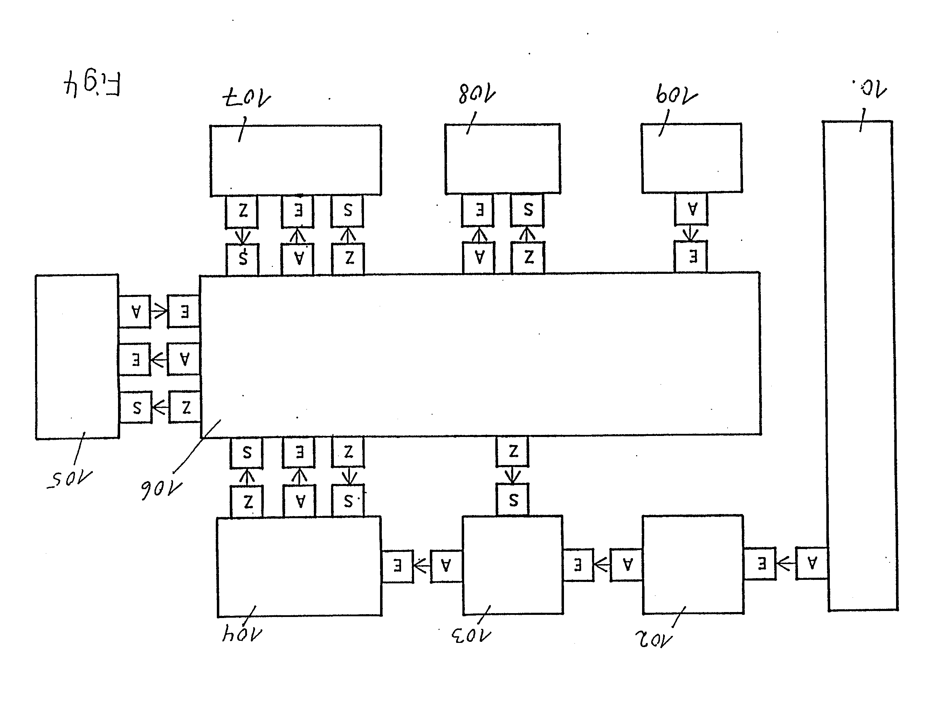

Da zur Auswertung der Druckmessungen bzw. der gemessenen Druckänderungen das gesamte Volumen des Reaktionsraumes bekannt sein muß, ist es erforderlich, vor jeder Meßreihe das Volumen des Reaktionsgefäßes 5 zu bestimmen. Hierzu ist erfindungsgemäß eine in die Verbindung zwischen Drucksensor 1 und Reaktionsgefäß 5 integrierte Vorrichtung vorgesehen, die schematisch in der Figur 3 dargestellt ist. Bei dem Ausführungsbeispiel nach Figur 3 wird als Verbindung zwischen Drucksensor 1 und Reaktionsgefäß 5 von einem zweiteiligen Verbindungsglied mit Glasstopfen 2, mit Belüftungseinrichtung 23 und Glasanschlußstopfen 4 mit Belüftungsloch 41 ausgegangen. Der Glasanschlußstopfen 4 weist hierbei zusätzlich den seitlichen Anschlußstopfen 45 mit dem Absaugkanal 46 auf. An diesen Absaugkanal 46 ist -bevorzugt direkt -der Meßzylinder 72 mit dem Hubkolben 71, die zusammen mit dem Stellglied 73 die Volumenmeßvorrichtung bilden, augeschlossen. Durch Bewegung des Kolbens 71 in Pfeilrichtung B wird das Volumen in dem Meßzylinder 72 definiert verändert, diese definierte Volumenänderung $\Delta V$ ist definiert reproduzierbar und zwar mittels des Stellgliedes 73 über den Hubweg. Das Stellglied kann mechanisch oder beispielsweise elektronisch betätigt werden. Mit Hilfe des um die Vorrichtung 7 ergänzten Glasanschlußstopfens 4 kann automatisch das Reaktionsvolumen und damit die Gefäßkonstanten des Reaktionsgefäßes 5 bestimmt werden, die dann bei der späteren Auswertung der Meßdaten die Umrechnung und Bestimmung der absoluten Daten ermöglichen. Neben der reproduzierbaren und zu messenden Volumenänderung $\Delta V$ des Reaktionsraumes, die bei der vorgesehenen Vorrichtung zu jedem gewünschten Zeitpunkt immer wieder ausgelöst werden kann, ist noch die Messung des absoluten Außendruckes, die Messung des Reaktionsgefäßdruckes relativ zum Außendruck vor der Volumenänderung und nach der Volumenänderung erforderlich, aus diesen Daten wird dann das Reaktionsvolumen des Reaktionsgefäßes ermittelt. Mit dieser in der Figur 3 schematisch dargestellten Vorrichtung kann das gesamte Volumen aller beteiligten Geräteteile genau bestimmt werden und damit auch eine spätere genaue Datenermittlung durchgeführt werden. Diese Eichmethode löst die bekannte Technik ab, nach der die Reaktionsgefäße ausgelitert wurden.

Um nun die gemessenen sehr kleinen Druckänderungen, die mittels des Drucksensors 1 relativ zum Außendruck gemessen werden, auszuwerten, wird beispielsweise die in der Figur 4 - schematisch dargestellte Meßdatenverarbeitungsanlage eingesetzt. Die Meßwerte sind noch im Hinblick auf den Einfluß der Schwankungen des Außendruckes und der Temperatur zu korrigieren. Die Meßdatenverarbeitungsanlage hat im wesentlichen die Aufgabe, die zusätzlichen Messungen wie Außendruck, Temperatur, die erforderlichen Messungen bei der Volumenbestimmung des Reaktionsgefäßes sowie die eigentlichen Meßsignale aufzunehmen, zu speichern und zu verarbeiten und wieder abzugeben. Insbesondere soll sie auch bei Langzeituersuchen die automatische Erfassung der Daten Speicherung derselben und Auswertung ermöglichen. Eine geeignete Meßdatenverarbeitungsanlage besteht beispielsweise aus den Meßstellen 101, das sind die Drucksensoren 1 und weitere erforderliche bereits erwähnte Meßstellen. Die von den Meßstellen 101 erfaßten Daten werden über Datenausgänge A über einen Dateneingang E an den Meßverstärker 102 geleitet. Der Meßverstärker 102 dient beispielsweise dazu, die analogen Meßsignale der Drucksensoren an den Meßbereich des Wandlers 104 anzupassen. Hierbei ist zwischen dem Meßverstärker 102 und dem Wandler 104 noch der Multiplexer 103 geschaltet, der das Signal des ausgewählten Drucksensors durchschaltet. Diese Auswahl geschieht über einen Steuerungseingang S des Multiplexers, der direkt von dem zentralen digitalen Rechner steuerbar ist, über sogenannte Zustandsausgänge Z. Auch von dem Wandler 104 werden die Signale über Steuerungseingänge, Datenausgänge und Zustandsausgänge an die zentrale digitale Rechnereinheit 106 gegeben.Der Wandler paßt die analogen Signale der Meßverstärker an das digitale Rechnersystem d.h. die digitale Rechnereinheit 106 der Gesamtanlage an. Hierbei wird bevorzugt ein integrier endes Meßver fahren angewendet, um eine hohe Störunterdrückung zu gewährleisten, d.h. die Signale werden integriert.

An die zentrale Rechnereinheit 106 ist der Datenspeicher 105 angeschlossen, der zur Aufnahme der Meßwerte während der Messung und zu deren Bereitstellung zur Auswertung durch die zentrale Rechnereinheit dient. Der Speicherplatz richtet sich hierbei nach dem anfallenden Meßwertumfang.

Desweiteren sindan die zentrale Rechnereinheit 106 eine oder mehrere Datenausgabeeinrichtungen 107, 108 angeschlossen. In dem dargestellten Beispiel beinhaltet die Datenausgabeeinrichtung 107 einen Drucker, während die Datenausgabeeinrichtung 108 ein Sichtgerät umfaßt. Von der Datenausgabe 107 können die Meßwerte an einen Drucker oder auch an andere Rechner oder Peripheriegeräte über entsprechende Schnittstellen ausgegeben werden. Das Sichtgerät 108 dient zur Darstellung der Meßwerte für den Benutzer.

Die Bedienungstastatur 109 dient zur Daten- und Befehlseingabe durch den Benutzer. Entsprechend den durch den zentralen digitalen Rechner zu erfüllenden Funktionen sind die anzuschließenden Geräteteile auszuwählen.

## Ansprüche

1. Druckmeßeinrichtung, insbesondere zum Erfassen von Gasmengenänderungen in einem abgeschlossenen Reaktionsgefäß unter Einsatz eines elektrische Signale liefernden Differenz-Drucksensors, der mit einem negativen Einlaßstutzen zum Erfassen des Außendruckes und einem Meßeinlaßstutzen zum Erfassen des in dem Reaktionsgefäß herrschenden Druckes ausgerüstet ist, **dadurch gekennzeichnet**, daß zum luftdichten lösbaren Verbinden des Drucksensors (1) mit dem Reaktionsgefäß (5) ein ein-oder teiliges mit einem durchgehenden Verbindungskanal (21) ausgerüstetes Verbindungteil (2) vorgesehen ist, das mit einem Ende den Meßeinlaßstutzen (12) des Drucksensors (1) außenseitig umfaßt und mit diesem mechanisch fest und luftdicht verbunden ist, und das mit einer einen Druckausgleich gestattenden Belüftungseinrichtung ausgebildet ist.

2. Druckmeßeinrichtung nach Anspruch 1, **dadurch gekennzeichnet**, daß das Verbindungsteil als Glasstopfen (2) mit einem seitlichen Stutzen (25) mit durchgehendem Belüftungskanal (23) der mittels eines Ventils (6) verschließbar ist, ausgebildet ist.

3. Druckmeßeinrichtung nach Anspruch 1, **dadurch gekennzeichnet**, daß als Verbindungsteile ein Glasstopfen (2) und ein Glasanschlußstopfen (4) vorgesehen sind und der Glasstopfen (2) über den Anschlußkonus (24) mit dem Glasanschlußstopfen (4), der an einem Ende mit einem Aufnahmekonus (43) ausgebildet ist, und einen mit dem Verbindungskanal (21) kommunizierenden durchgehenden Verbindungskanal (44) aufweist, luftdicht lösbar verbunden ist.

4. Druckmeßeinrichtung nach Anspruch 3, **dadurch gekennzeichnet**, daß in dem Glasstopfen (2) ein etwa senkrecht zu dem Verbindungskanal (21) verlaufender und mit diesem kommunizierender Belüftungskanal (23) ausgebildet ist, der mit einem in der Wandung des Glasanschlußstopfens (4) ausgebildeten Belüftungskanal (41) korrespondiert.

5. Druckmeßeinrichtung nach einem der Ansprüche 1 bis 4, **dadurch gekennzeichnet** , daß eine mit den Verbindungskanälen (21,44) kommunizierende Vorrichtung (7), mit der eine reproduzierbare Volumenänderung des angeschlossenen Reaktionsraumes des Reaktionsgefäßes(5) erzeugbar ist, vorgesehen ist.

6. Druckmeßeinrichtung nach Anspruch 5, **dadurch gekennzeichnet** , daß die Vorrichtung - (7) einen Meßzylinder (72) mit einem Hubkolben - (71) und einem mechanischen, elektrischen bzw. elektronischen Stellglied(73) enthält und der Meßzylinder (72) an einen in einem Anschlußstutzen (45) des Glasanschlußstopfens (4) ausgebildeten Absaugkanal (46) anschließbar ist.

7. Druckmeßeinrichtung nach Anspruch 5 oder 6, **dadurch gekennzeichnet** , daß Einrichtungen zum Messen des absoluten Außendruckes und des in dem Reaktionsgefäß herrschenden Druckes vorgesehen sind.

8. Druckmeßeinrichtung nach einem der Ansprüche 1 bis 7, **dadurch gekennzeichnet** , daß der Drucksensor (1) mit einer Meßdatenverarbeitungsanlage (100) verbunden ist, die die ausgelösten elektrischen Signale auswertet.

9. Druckmeßeinrichtung nach Anspruch 8, **dadurch gekennzeichnet** , daß die Meßdatenverarbeitungsanlage (100) eine zentrale digitale Recheneinheit (106) mit einem die analogen Signale des Drucksensors (1) an die digitale Recheneinheit anpassenden Wandler (104) , dem ein Meßverstärker (102) mit Multiplexer (103) für die ankommenden und auszuwählenden Signale vorgeschaltet ist, enthält, sowie einen Datenspeicher (105), eine Datenausgabe (107,108) und eine Bedienungstastatur (109).

10. Druckmeßeinrichtung nach einem der Ansprüche 1 bis 9, **dadurch gekennzeichnet** , daß die Drucksensoren (1) einen Meßbereich von etwa 0,05 bis 50 hPa aufweisen.

Fig 1

Fig 2

Fig 3

Fig. 4